# EUROPEAN PATENT APPLICATION

(11) **EP 1 279 325 A1**
(43) Date of publication of application: **29.01.2003**
(21) Application number: 02016051.1
(22) Date of filing: 19.07.2002
(51) Int. Cl.: A01G 3/033

(54) **Motion driving device for a shear**

(30) Priority: 24.07.2001 IT BO20010475
(71) Applicant: C.P.M. S.A.S. DI BULGARELLI ELIO & C., 40024 Castel San Pietro Terme (Bologna) (IT)
(72) Inventor: Bulgarelli, Elio, 40024 Castel San Pietro Terme (Bologna) (IT)
(74) Representative: Negrini, Elena

(57) **Abstract**

A motion driving device for a shear (50) having a fixed blade (54) and a mobile blade (55) restrained by a first fulcrum means (56) to an actuator (51) that moves a power takeoff (52) with reciprocating motion between two opposite positions (A, B) for driving the mobile blade (55).

The device (1) includes a first connecting rod (2) having an end connected to the power takeoff (52), a middle element (3), connected to the free end of to the first connecting rod (2) and the actuator (51), a second connecting rod (4) interconnected between a middle element (3) and the mobile blade (55).

In correspondence of the opposed positions (A, B) of the power takeoff (52), the device (1) sets the mobile blade (55) respectively in closing conditions (C) or in maximum divarication (D) with respect to the fixed blade (54).

## Description

The present invention relates to cutting devices for pruning branches and similar used in agriculture and generally in gardening.

Particularly the invention refers to a motion-driving device for shears fit to transmit the linear actuator motion to a mobile blade of the shear.

There are known shears operated by linear actuators of pneumatic, hydraulic or electric type, in which the motion generated by active members of the actuator is transmitted to a mobile blade by means of a connecting rod. Often the actuator acts as handle for the operator's hand that uses the shears operating these latter by means of a control associated to said handle.

The main drawback of the known motion driving for shears consists in that the blades and the related pivot are positioned sideways with respect to the actuator, unbalancing this latter and making difficult and slow the pruning action.

A further drawback of the known motion driving for shear, consists in that often the driving is exposed causing risks for the user of the shear, already dangerous in itself.

Other drawback consists in that said driving devices often provide an insufficient or unfavorable velocity ratio between actuator and mobile blade.

Object of the present invention is to propose a safe motion-driving device, with an optimal velocity ratio and allowing a positioning almost axial of the connection between the blades and an handy and ergonomic configuration of the shear.

Other object is to reduce the shear overall dimensions.

The above-mentioned objects are achieved according to the content of the claims. The characteristics of the invention are underlined in the following with particular reference to the attached drawing tables, in which:

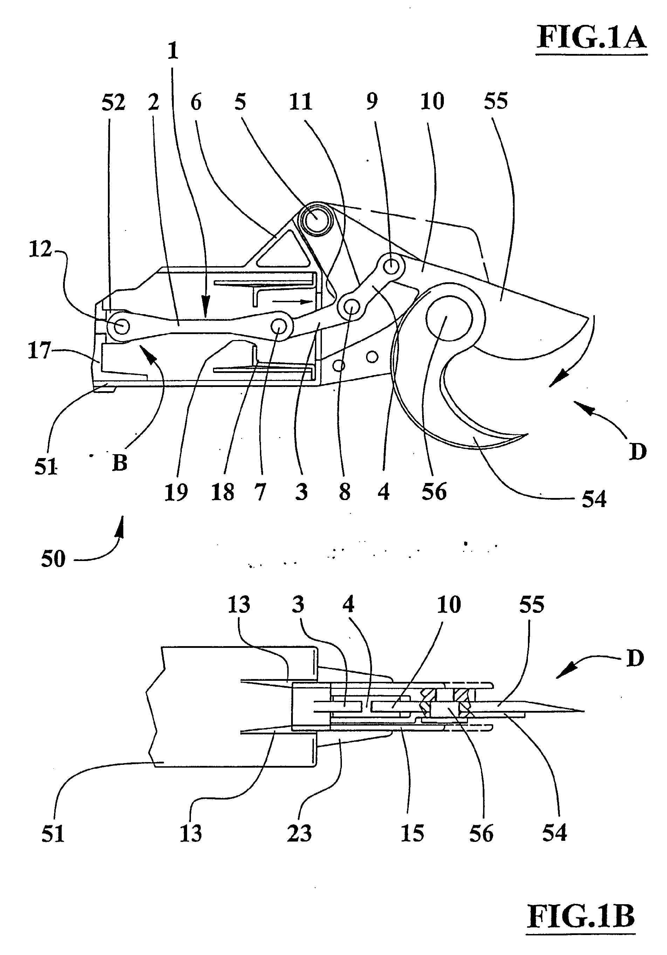

- figure 1A shows a side view of the device object of the present invention associated with a shear in a full opening condition of the blades and in which some parts have been removed for better underlining others;
- figure 1B shows a top view of the device of figure 1A;

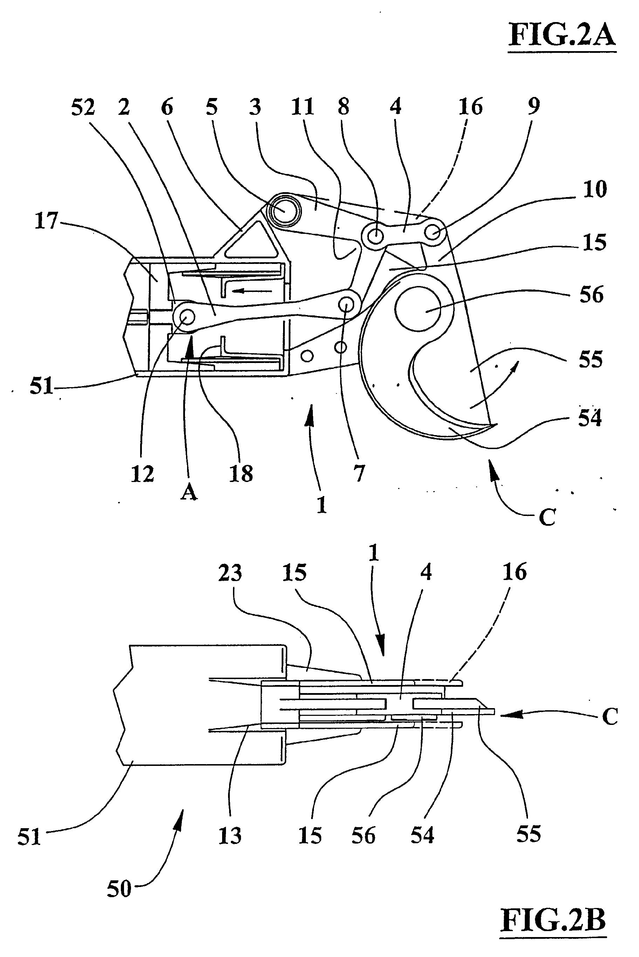

- figure 2A shows the device of figure 1A in a closing condition of the blades;
- figure 2B shows a top view of the device of figure 2A;

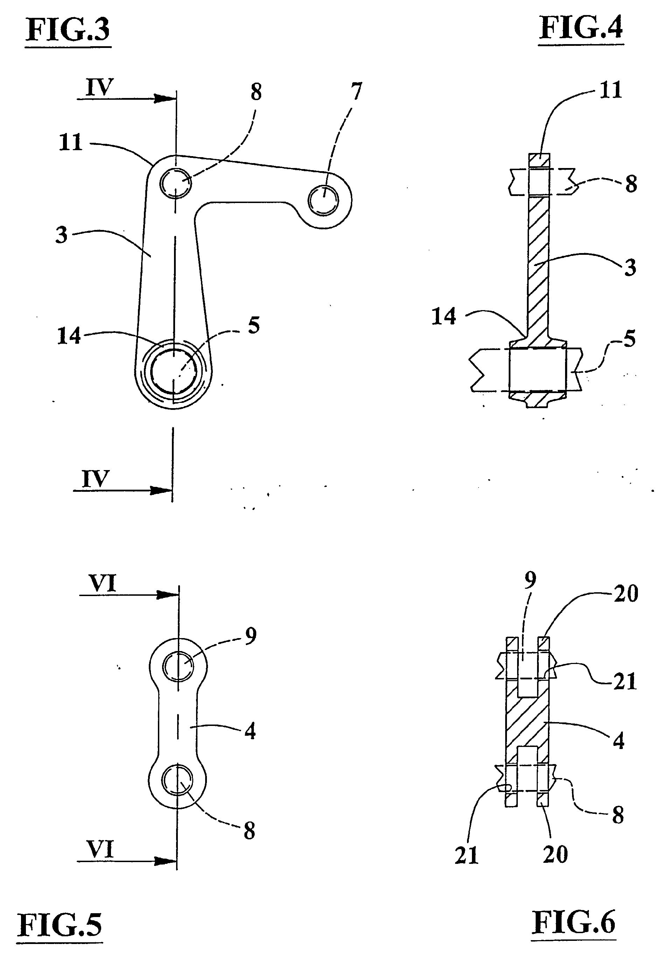

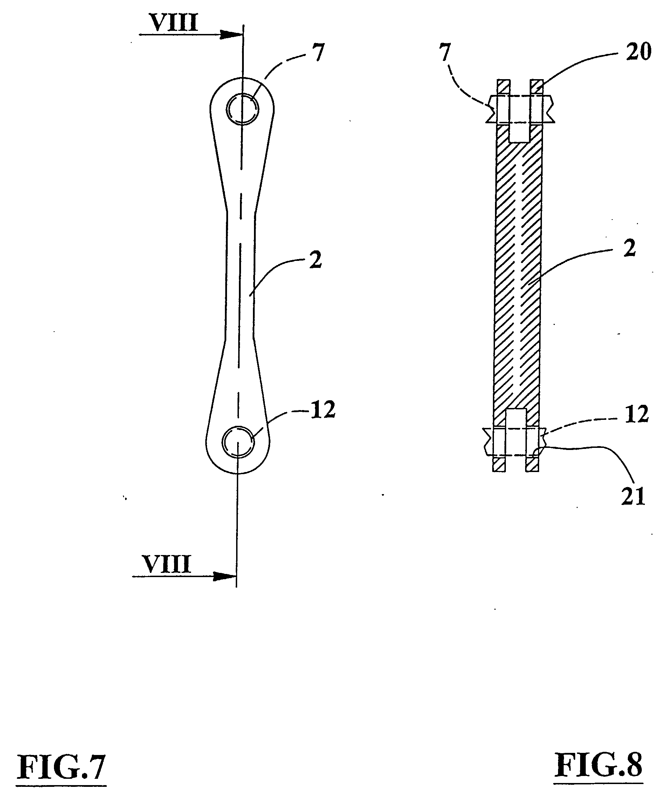

- figures 3, 5 and 7 show enlarged side views respectively of a middle element, a second connecting rod and a first connecting rod of the figure 1A device;
- figures 4, 6 and 8 show section views respectively according to the plan IV-IV of figure 3, VI-VI of figure 5 and VIII - VIII of figure 7.

With reference to figures from 1A to 8, numeral 50 indicates a shear having a linear actuator 51, for instance of hydraulic, electric or pneumatic type.

The linear actuator 51 is provided with a power takeoff 52 that is moved by active members of the actuator 51, known and not shown, between an external position A and a inner position B with respect to the actuator 51, once the operator activates a command of the actuator 51, for instance a lever or a trigger known and not shown. By way of example, the active members of the actuator 51 may consist of a pneumatic or hydraulic piston or in electromagnetic means.

The power takeoff 52 consists in a connection, for instance directly fixed to a piston or to a stem of this latter and with a hole.

The shear 50 has a fixed blade 54, rigidly locked to the actuator 51, and a mobile blade 55 joined to a first fulcrum mean 56 of the actuator 51 for instance fixed to a bracket of this latter or to the fixed blade 54.

The power takeoff 52 make the mobile blade 55 swinging by means of the device 1 object of the present invention.

This latter includes a first connecting rod 2 having an end connected to the power takeoff 52, a middle element 3 connected to the free end of the first connecting rod 2 and to the actuator 51 and a second connecting rod 4 interconnected between the middle element 3 and the mobile blade 55.

The connection between the first connecting rod 2 and the power takeoff 52 is carried out by a first pivot mean 12 engaged in the hole of the power takeoff 52 and in related holes of the first connecting rod 2.

An end of the middle element 3 is provided with a second pivot mean 7 for connecting the first connecting rod 2 and the other end is provided with a second fulcrum mean 5 for joining connecting means 6 of the shear 50.

The middle element 3 has a crank shape and in correspondence of the crank angle 11 has a third pivot mean 8 for connecting to an end of the second connecting rod 4.

The remaining end of the second connecting rod 4, has a fourth pivot mean 9 for connecting a protrusion 10 of the mobile blade 55.

The pivot means first 12, second 7, third 8 and fourth 9 and the fulcrum means first 56 and second 5 carry out freely rotating connections.

The connecting rods first 2 and second 4 are "H" shaped having, in correspondence of each end, two protrusions 20 each one with a hole 21 for the related pivot mean 7, 8, 9, 12.

The connecting means 6 have a couple of bracket means 13 each one having a hole for the end of the second fulcrum mean 5 whose median portion is engaged in a cylindrical bushing 14 of the middle element 3.

The device 1 further includes a couple of flanges 15 fixed to the shear 50 and sideways positioned with respect to the middle element 3.

It is provided that each flange 15 can have an extent 16 extended at least up to the position of the fourth pivot mean 9 corresponding to the external position A of the power takeoff 52.

Each flange 15 is fixed to stiffening means 23 locked to the shear 50.

In order to avoid "slaps", that is transversal movements, of the power takeoff 52, it is provided that this latter can be fixed to a sliding mean 17 within the actuator 51. The sliding mean 17 has a sidewall almost complementary to the inner surface of the related portion of the actuator 51 and can be made, for instance, of antifriction plastic material.

The device 1 can include a stop mean 18 having an opening 19 for the first connecting rod 2 and fixed to the related end of the actuator 51.

The stop mean 18 is fit to mate, in correspondence of the external position B, the sliding mean 17 or active members of the actuator 51.

The operation provides that, starting from the inner position B, in correspondence of which the mobile blade 55 is in a maximum divarication condition D with respect to the fixed blade 54, when an operator actives the control of the actuator 51, the power takeoff 52 is moved by the active members of the actuator 51 outwards the actuator causing in cascade: a rototranslation of the first connecting rod 2, a rotation of the middle element 3, a rototraslation of the second connecting rod 4 and a rotation of the mobile blade 55 up to reach the external position A of the power takeoff 52, in correspondence of which the mobile blade 55 mates the fixed blade 54, defining a closing condition C of these blades.

Therefore, in order to reach this last condition, the device 1 transmits forces, which stress in compression the connecting rods, first 2 and second 4, and a portion of the middle element 3.

When the control is released or automatically, the actuator 51 retries the power takeoff 52 in the inner position B and therefore moves the blades 55, 54 in the original maximum divarication condition D.

The flanges 15 and the possible extents 16 have the double function to protect the device 1 and to avoid interferences between this latter and operator's members, for instance the fingers.

The stop mean 18 is the stop of the active members of the actuator 51.

It is important to observe that the device 1 advantageously allow an optimal operation also in a shear assemblage condition wherein the blade closing is done by tensile stress in which, for instance, the protrusion 10 of the mobile blade 55 is carried out in a position opposed to the shown position, with respect to the first fulcrum mean 56. Particularly in very long shears, for instance having an extension interposed between the actuator and the blades, in order to avoid the bending of the driving members of the shear, or the bending of the first connecting rod 2 if considerably long, the device 1 causes the passage from the maximum divarication condition D to the closing condition C in correspondence of the passage of the power takeoff 52 from the external position B to the inner position A. Therefore the device 1, associated to this last type of shear, in order to reach the closing condition C, transmits tensile forces stressing the connecting rods first 2 and second 4 and a portion of the middle element 3, so avoiding bending of the first connecting rod 2 or driving members of the shear.

The main advantage of the present invention is to provide a safe motion-driving device, with an optimal velocity ratio and allowing a positioning almost axial of the connection between the blades and a handy and ergonomic configuration of the shear.

Further object is to provide a device allowing to reduce the overall dimensions of the shear.

Other advantage is to provide a device having easy and convenient manufacturing and safe operation.

## Claims

1. Motion driving device for a shear (50) having a fixed blade (54) and a mobile blade (55) moved by an actuator (51) between a closing condition (C) and a maximum divarication condition (D), said device (1) being **characterized in that** includes:
- at least a first connecting rod (2) having an end connected to the actuator (51);
- at least a middle element (3), an end thereof is hinged to the shear (50) and the free end to the first connecting rod (2);
- a second connecting rod (4) interconnected between the middle element (3) and the mobile blade (55).

2. Device according to claim 1 **characterized in that** the first connecting rod (2) and the actuator (51) are connected through a first pivot mean (12).

3. Device according to claim 1 **characterized in that** the middle element (3) has an end hinged to connecting means (6) of the shear (50) through a second fulcrum mean (5) and the free end is hinged to the first connecting rod (2) through a second pivot mean (7).

4. Device according to claim 1 or claim 2 **characterized in that** the middle element (3) is crank shaped and in correspondence of the angle (11) of this latter has a third pivot mean (8) for connecting the second connecting rod (4).

5. Device according to any of the preceding claims **characterized in that** an end of the second connecting rod (4) has a fourth pivot mean (9) for connecting a protrusion (10) of the mobile blade (55).

6. Device according to any of the preceding claims **characterized in that** at least one between the first connecting rod (2) and the second connecting rod (4) has, in correspondence of at least an end, two protrusions (20) each having a hole (21) engaged by a related pivot mean, first (12), second (7), third (8) and fourth (9).

7. Device according to claim 3 **characterized in that** the connecting means (6) have a couple of bracket means (13), each one having a housing for each end of the second fulcrum mean (5), whose median portion is engaged in a bushing (14) of the middle element (3).

8. Device according to any of the preceding claims **characterized in that** further includes a couple of flanges (15) fixed to the shear (50) and positioned sideways at least to the middle element (3).

9. Device according to claim 5 and claim 8 **characterized in that** each flange (15) has an extent (16) extended at least up to the position of the fourth pivot mean (9) corresponding to the closing condition (C) of the mobile blade (55).

10. Device according to claim 8 or claim 9 **characterized in that** each flange (15) is fixed to stiffening means (23) locked to the shear (50).

11. Device according to any of the preceding claims **characterized in that** further includes a sliding mean (17) fixed to the actuator (51).

12. Device according to any of the preceding claims **characterized in that** further includes a stop mean (18) fixed to an end of the actuator (51) and having an opening (19) for the first connecting rod (2).

13. Device according to any of the preceding claims **characterized in that** when said device (1) is associated to a shear (50) so that the closing of the mobile blade (55) is made by a force applied to the protrusion (10) toward the actuator (51), the passage from the maximum divarication condition (D) to the closing condition (C) is carried out by a force of the actuator (51), which tensile stresses the connecting rods, first (2) and second (4), and a portion of the middle element (3).
